(19) Europäisches Patentamt / European Patent Office / Office européen des brevets

(11) **EP 4 349 911 A1**

(12) **EUROPEAN PATENT APPLICATION**
published in accordance with Art. 153(4) EPC

(43) Date of publication:
**10.04.2024 Bulletin 2024/15**

(21) Application number: **22811263.7**

(22) Date of filing: **20.05.2022**

(51) International Patent Classification (IPC):
**C08L 27/12** (2006.01) **B29B 7/48** (2006.01)
**B29B 9/12** (2006.01) **C08J 3/22** (2006.01)
**C08K 3/04** (2006.01) **C08L 27/18** (2006.01)

(52) Cooperative Patent Classification (CPC):
**B29B 7/48; B29B 9/12; C08J 3/22; C08K 3/04; C08L 27/12; C08L 27/18**

(86) International application number:
**PCT/JP2022/020999**

(87) International publication number:
**WO 2022/249993 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.05.2021 JP 2021087368**

(71) Applicant: **AGC INC.**
**Chiyoda-ku,**
**Tokyo 1008405 (JP)**

(72) Inventors:
• **ABE Masatoshi**
  **Tokyo 100-8405 (JP)**
• **SASAKI Toru**
  **Tokyo 100-8405 (JP)**
• **YODOGAWA Masahide**
  **Tokyo 100-8405 (JP)**

(74) Representative: **Müller-Boré & Partner**
**Patentanwälte PartG mbB**
**Friedenheimer Brücke 21**
**80639 München (DE)**

(54) **RESIN COMPOSITION, METHOD FOR PRODUCING SAME, AND MOLDED BODY**

(57) To provide resin compositions excellent in electrical conductivity and flexibility.

A resin composition comprising a fluororesin and a carbon nanostructure, wherein the carbon nanostructure includes a plurality of carbon nanotubes that are branched and share a common wall with each other.

Fig. 1

**Description**

TECHNICAL FIELD

The present invention relates to a resin composition, a method for its production, and a molded body.

BACKGROUND ART

A fluororesin is excellent in heat resistance, flame resistance, chemical resistance, weather resistance, non-adhesiveness, low friction, low dielectric properties, etc. and thus is used in a wide range of fields as a corrosion-resistant piping material for chemical plants, a material for agricultural vinyl houses, a release coat material for kitchenware, a coating material for heat-resistant and flame-resistant electric wires, etc.

On the other hand, since a fluororesin has a high insulating property, a conductive filler is usually added when it is used in semiconductor manufacturing equipment parts or automobile fuel hoses, where electrical conductivity is required. As the conductive filler, carbon black or carbon nanotubes are used (Patent Document 1).

By the way, a method of preparing a polymer composite by dispersing carbon nanostructures in a polymer matrix in such a state that a shear force is applied, has been proposed (Patent Document 2). The carbon nanostructures used in this method include multiple carbon nanotubes that are branched, cross-linked and share a common wall with each other. The crosslinked bonds between the carbon nanotubes in the carbon nanostructures are broken by the shear force during dispersion into the polymer matrix.

PRIOR ART DOCUMENTS

PATENT DOCUMENTS

        Patent Document 1: JP-A-2015-83666
        Patent Document 2: JP-A-2015-533187

DISCLOSURE OF INVENTION

TECHNICAL PROBLEM

In the method of adding carbon black to a fluororesin, in order to obtain sufficient electrical conductivity, it is necessary to increase the amount of carbon black added and, as a result, there has been a problem that the flexibility and fluidity of the fluororesin will be lost.

Carbon nanotubes can achieve equivalent electrical conductivity in a smaller amount than carbon black. However, in the general production process, carbon nanotubes are not sufficiently dispersed in the fluororesin, and their function is not fully expressed, whereby there has been a problem such that an additional process is required. Further, sufficient electrical conductivity could not be achieved for a fluororesin with a high insulation property, and if the amount of carbon nanotubes added was increased to achieve sufficient electrical conductivity, there was a problem such that the flexibility and fluidity of the fluororesin would be lost.

In Patent Document 2, a fluororesin is not studied as a polymer matrix.

The present invention provides a resin composition excellent in electrical conductivity and flexibility, a method for its production, and a molded body.

SOLUTION TO THE PROBLEM

The present invention has the following embodiments.

        [1] A resin composition comprising a fluororesin and a carbon nanostructure, wherein the carbon nanostructure includes a plurality of carbon nanotubes that are branched and share a common wall with each other.
        [2] The resin composition according to [1], wherein the fluororesin is a polymer containing units based on tetrafluoroethylene.
        [3] The resin composition according to [1] or [2], wherein the content of the carbon nanostructure is from 0.001 to 10 mass% to the entire mass of the resin composition.
        [4] The resin composition according to any one of [1] to [3], wherein the volume resistivity, as measured in accordance with JIS K7194, for a sheet of 1 mm in thickness molded from the resin composition, is at most $10^7$ Ω·cm.

[5] The resin composition according to any one of [1] to [4], which further comprises a filler other than the carbon nanostructure.

[6] The resin composition according to any one of [1] to [5], which further comprises a polymer other than the fluororesin.

[7] The resin composition according to any one of [1] to [6], wherein the number of folds resistance, as measured in accordance with JIS P8115, for a test specimen of 0.23 mm in thickness, 130 mm in length and 13 mm in width molded from the resin composition, is at least 6,000 times.

[8] The resin composition according to any one of [1] to [7], wherein the melt flow rate, as measured in accordance with ASTM-D3159, is at least 1.5 g/10 min.

[9] A method for producing a resin composition, comprising dry-mixing or melt-kneading a fluororesin and a carbon nanostructure, wherein the carbon nanostructure includes a plurality of carbon nanotubes that are branched, cross-linked, and share a common wall with each other.

[10] The production method according to [9], wherein a master batch is prepared by melt-kneading a portion of the fluororesin and the carbon nanostructure, and then the master batch and the remaining portion of the fluororesin are melt-kneaded.

[11] The production method according to [9], wherein the fluororesin and the carbon nanostructure are melt-kneaded by a twin-screw extruder,

> wherein the twin-screw extruder has a screw with a plurality of screw elements including at least two kneading disc elements, mounted on a shaft, and a barrel incorporating two such screws, and
> the kneading area ratio, which is a value having the total length of said at least two kneading disc elements divided by the total length of the screw, is greater than 0.1.

[12] The production method according to [11], wherein the effective shear rate quantity determined by the following formula (1) is greater than 8:

$$\text{Effective shear rate quantity} = \text{said kneading area ratio} \times \text{screw shear rate}$$
$$(\text{seconds}^{-1}) \text{ obtained by the following formula (2)} \qquad (1)$$

$$\text{Screw shear rate} = 3 \times \text{barrel diameter (mm)} \times \text{screw rotation speed (rpm)}/60$$
$$(2)$$

[13] The production method according to any one of [9] to [12], wherein the amount of the carbon nanostructure is from 0.001 to 10 mass%, to the entire mass of the resin composition.

[14] A molded body having the resin composition as defined in any one of [1] to [8] molded.

ADVANTAGEOUS EFFECTS OF INVENTION

According to the present invention, it is possible to provide a resin composition excellent in electrical conductivity and flexibility, and a method for its production, as well as a molded body excellent in electrical conductivity and flexibility.

BRIEF DESCRIPTION OF DRAWING

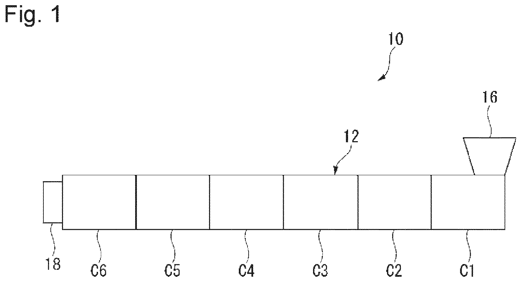

Fig. 1 is a schematic diagram of the twin-screw extruder used in Examples.

DESCRIPTION OF EMBODIMENTS

The meanings and definitions of terms in the present invention are as follows.

The term "melt-moldable" means to exhibit melt flowability.

The term "exhibit melt flowability" means that a temperature at which the melt flow rate becomes to be from 0.1 to 1,000 g/10 min is present.

The "melt flow rate" is the melt mass flow rate as measured in accordance with ASTM-D3159. Hereinafter, the melt flow rate will be referred to also as MFR.

The "melting point" is the temperature corresponding to the maximum value of the melting peak as measured by the differential scanning calorimetry (DSC) method.

The "volume resistivity" is measured in accordance with JIS K7194.

The "number of folds" is the number of times the test specimen is bent back and forth until it breaks, and is measured in accordance with JIS P8115.

A "unit based on a monomer" is a generic term for an atomic group directly formed by polymerization of a single monomer molecule and an atomic group obtained by chemical conversion of a portion of the atomic group. In this specification, units based on a monomer are simply referred to also as monomer units.

A "monomer" means a compound having a polymerizable carbon-carbon double bond.

[Resin composition]

A resin composition in accordance with one embodiment of the present invention (hereinafter referred to also as "the present resin composition") comprises a fluororesin and a specific carbon nanostructure (hereinafter referred to also as CNS (A)).

The present resin composition may further contain other components other than the fluororesin and CNS (A), as the case requires.

(Fluororesin)

As the fluororesin, a melt-moldable fluororesin is preferred from the viewpoint of moldability and electrical conductivity. As the melt-moldable fluororesin, known ones may be mentioned, and, for example, a copolymer (hereinafter referred to also as PFA) containing tetrafluoroethylene (hereinafter referred to also as TFE) units and fluoroalkyl vinyl ether units, a copolymer (hereinafter referred to also as FEP) containing TFE units and hexafluoropropylene units, a copolymer (hereinafter referred to as ETFE) containing ethylene units and TFE units, a polymer (hereinafter referred to as PVDF) containing vinylidene fluoride units, a polymer (hereinafter referred to as PCTFE) containing chlorotrifluoroethylene units, a copolymer (hereinafter referred to as ECTFE) containing ethylene units and chlorotrifluoroethylene units, a copolymer (hereinafter referred to as CTFE/TFE copolymer) containing chlorotrifluoroethylene units and TFE units, and an adhesive fluororesin as described below, may be mentioned. One type of these fluororesins may be used alone, or two or more types may be used in combination.

As the fluoroalkyl vinyl ether, for example, a compound represented by the following formula (3) may be mentioned.

$$CF_2=CF-O-R^f \qquad (3)$$

Here, $R^f$ is a $C_{1-10}$ fluoroalkyl group.

As the fluoroalkyl vinyl ether, from the viewpoint of the heat resistance, a perfluoro(alkyl vinyl ether) is preferred. As the perfluoro(alkyl vinyl ether), for example, a compound in which $R^f$ in the above formula (3) is a $C_{1-10}$ perfluoroalkyl group, may be mentioned.

As the melt-moldable fluororesin, a fluororesin having a melting point is preferred.

The melting point of the fluororesin is preferably from 150 to 420°C, more preferably from 170 to 350°C, further preferably from 200 to 320°C. When the melting point of the fluororesin is at least the above lower limit value, it will be excellent in heat resistance, and when it is at most the above upper limit value, it will be excellent in moldability.

As the melt-moldable fluororesin, from such a viewpoint that the flexibility will be more superior, a polymer containing TFE units is preferred. For example, one type selected from the group consisting of PFA, FEP, ETFE and a CTFE/TFE copolymer may be used alone, or two or more types may be used as blended.

Among the above, PFA, FEP and ETFE are preferred from the viewpoint of heat resistance, sliding properties and moldability.

The molar ratio of TFE units to fluoroalkyl vinyl ether units (TFE units/fluoroalkyl vinyl ether units) in PFA is preferably from 92/8 to 99/1. When the molar ratio of the respective units is within the above range, heat resistance and flowability will be more excellent.

The ratio of the total of TFE units and fluoroalkyl vinyl ether units to all units constituting PFA is preferably at least 50 mol%, more preferably at least 90 mol%. The upper limit is not particularly limited and may be 100% mol%.

The molar ratio of TFE units to hexafluoropropylene units (TFE units/hexafluoropropylene units) in FEP is preferably from 80/20 to 99/1. When the molar ratio of the respective units is within the above range, heat resistance and flowability will be more excellent.

The ratio of the total of TFE units and hexafluoropropylene units to all units constituting FEP is preferably at least 50 mol%, more preferably at least 90 mol%. The upper limit is not particularly limited and may be 100 mol%.

The molar ratio of TFE units to ethylene units (TFE units/ethylene units) in ETFE is preferably from 50/50 to 90/10. When the molar ratio of the respective units is within the above range, flexibility, heat resistance and flowability will be more excellent.

The ratio of the total of TFE units and ethylene units to all units constituting ETFE is preferably at least 50 mol%, more preferably at least 90 mol%. The upper limit is not particularly limited and may be 100 mol%.

Each fluororesin of PFA, FEP, ETFE, PVDF, PCTFE, ECTFE and the CTFE/TFE copolymer may have other monomer units in such a range that the intrinsic properties of the fluororesin are not impaired. For example, in the case of ETFE, it may have monomer units other than ethylene and TFE.

As other monomers, TFE (except PFA, FEP, ETFE and CTFE/TFE copolymer), hexafluoropropylene (except FEP), fluoroalkyl vinyl ether (except PFA), perfluoroalkylethylene (number of carbon atoms in perfluoroalkyl group: from 1 to 10), perfluoroalkylallyl ether (number of carbon atoms in perfluoroalkyl group: from 1 to 10), a compound represented by the following formula (4), etc. may be mentioned.

$$CF_2=CF[OCF_2CF(CF_3)]_nOCF_2(CF_2)_pX \qquad (4)$$

Here, X is a halogen atom, n is an integer of from 0 to 5, and p is an integer of from 0 to 2. As X, a fluorine atom or a chlorine atom is preferred, and a fluorine atom is particularly preferred.

The ratio of other monomer units to all units constituting the fluororesin is preferably at most 50 mol%, more preferably from 0.01 to 45 mol%.

The adhesive fluororesin is a fluororesin containing at least one functional group (hereinafter referred to also as functional group I) selected from the group consisting of a carbonyl group-containing group, a hydroxy group, an epoxy group and an isocyanate group. By containing the functional group I, the adhesion between the fluororesin and other substrate will be improved. This is thought to be due to some kind of interaction (chemical reaction, etc.) between the functional group I and the bonding group (carbonyl group, etc.) which said other substrate has.

The functional group I is preferably present on at least one of the main chain terminal and side chain of the adhesive fluororesin.

As the functional group I, a carbonyl group-containing group is preferred from the viewpoint of the reactivity with other substrate and improvement of interaction with the bonding group. A carbonyl group-containing group is a group having a carbonyl group (-C(=O)-) in its structure. As the carbonyl group-containing group, a hydrocarbon group having a carbonyl group between carbon atoms, a carbonate group, a carboxy group, a haloformyl group, an alkoxycarbonyl group, an acid anhydride residue (-C(=O)-O-C(=O)-), etc. may be mentioned.

As the hydrocarbon group, a $C_{2-8}$ alkylene group may be mentioned.

The haloformyl group is represented by -C(=O)-X (where X is a halogen atom). As the halogen atom in the haloformyl group, a fluorine atom, a chlorine atom, etc. may be mentioned, and from the viewpoint of the reactivity with other substrate, a fluorine atom is preferred. That is, as the haloformyl group, a fluoroformyl group (also called a carbonyl fluoride group) is preferred.

As the alkoxy group in the alkoxycarbonyl group, from the viewpoint of the reactivity with other substrate, a $C_{1-8}$ alkoxy group is preferred, and a methoxy group or an ethoxy group is particularly preferred.

The content of the functional group I in the adhesive fluororesin is, to $1 \times 10^6$ carbon atoms of the main chain in the adhesive fluororesin, preferably from 10 to 60,000, more preferably from 100 to 50,000, further preferably from 100 to 10,000, particularly preferably from 300 to 5,000. When the content of the functional group I is at least the above lower limit value, the adhesion between the adhesive fluororesin and other substrate will be more excellent, and when the content is at most the above upper limit value, a high degree of adhesion to other substrate will be obtained at a low processing temperature.

The content of the functional group I can be measured by a method such as nuclear magnetic resonance (NMR) analysis or infrared absorption spectrum analysis. For example, using a method such as infrared absorption spectrum analysis as described in JP-A-2007-314720, the ratio (mol%) of units containing the functional group I to all units constituting the adhesive fluororesin is obtained, and the content of the functional group I can be calculated from the ratio.

The adhesive fluororesin is obtainable, for example, by one or more of the following methods: a method of polymerizing a monomer having a functional group I together at the time when polymerizing a predetermined monomer to produce the fluororesin; a method of using a compound having a functional group I as at least one of a radical polymerization initiator and a chain transfer agent; a method of heating a fluororesin having a functional group to form a functional group I as decomposed by heat, to form the functional group I; and a method of graft polymerizing a monomer having a functional group I onto a fluororesin.

As the base fluororesin constituting the adhesive fluororesin, the above-mentioned melt-moldable fluororesin is preferred, and a fluororesin having TFE units is more preferred. As the base fluororesin, two or more types may be used as blended.

The weight average molecular weight of the fluororesin is preferably from 50,000 to 5,000,000. When the weight average molecular weight of the fluororesin is at least 50,000, the mechanical strength and heat resistance will be superior, and when the weight average molecular weight is at most 5,000,000, the melt flowability will be excellent.

MFR of the fluororesin is preferably at least 0.5 g/10 min., more preferably at least 2 g/10 min., further preferably at least 5 g/10 min. MFR of the fluororesin is preferably at most 80 g/10 min., more preferably at most 30 g/10 min. When MFR is at least the above lower limit value or at most the above upper limit value, it will be easier to make MFR of the resin composition to be at least the preferred lower limit value or at most the preferred upper limit value as described below.

MFR of a fluororesin is an index for the molecular weight of the fluororesin. The larger the MFR, the smaller the molecular weight, while the smaller the MFR, the larger the molecular weight. MFR of the fluororesin can be adjusted by the production conditions for the fluororesin.

MFR of a fluororesin is a value at a temperature of at least the melting point + 20°C of the fluororesin and at most the melting point + 90°C of the fluororesin.

The measurement conditions for MFR are typically those specified by ASTM. In ASTM, for example, the measurement temperature and load are stipulated depending on the type of the fluororesin as follows.

ETFE: ASTM D3159, measurement temperature 297°C, load 49 N.
PFA: ASTM D3307, measurement temperature 372°C, load 49 N.
FEP: ASTM D2116, measurement temperature 372°C, load 49 N.
PVDF: ASTM D1238, measurement temperature 232°C, load 49 N.

However, if the melting point of the fluororesin is lower by at least 100°C than the above measurement temperature, the measurement conditions are changed. For example, in the case of ETFE with a melting point of 180°C, the measurement temperature is set to be 230°C and the load is set to be 21.2 N.

The shape of the fluororesin used in the present resin composition is not particularly restricted and may be either pellets or a powder. The powder is preferably one obtained by grinding pellets. The particle size of the powder is preferably from 1 to 50 μm, more preferably from 10 to 40 μm, since CNS is easily dispersible in the fluororesin.

(CNS (A))

CNS (A) contains a plurality of carbon nanotubes that are branched and share a common wall with each other. Hereafter, carbon nanotubes will be referred to also as CNT.

In CNS (A), the plurality of CNT need only have the structural morphologies of branching and sharing a common wall as a whole, and each of the plurality of CNT needs not have all of those structural morphologies. In some embodiments, at least some of the plurality of CNT are branched and at least some of the plurality of CNT share a common wall.

The plurality of CNT that branch and share a common wall with each other may be further cross-linked or may not be cross-linked.

The shape of CNT in the resin composition can be confirmed by scanning electron microscopy (SEM) or other means.

CNS (A) may contain, in addition to a plurality of CNT that branch and share a common wall with each other, transition metal nanoparticles, carbon nanofibers, nanodiamonds, graphite, carbon black, graphene or fullerenes. Transition metal nanoparticles are, for example, the catalyst used at the time of forming the after-described CNS (B) on the growth substrate.

CNS (A) is typically formed by applying a shear force to a carbon nanostructure containing a plurality of CNT that are branched, cross-linked and share a common wall with each other (hereinafter referred to also as CNS (B)). When a shear force is applied to CNS (B), at least some of the crosslinked bonds will be broken. The degree of breakage of the crosslinked bonds can be adjusted by the magnitude of the shear force.

In CNS (B), the plurality of CNT need only have the structural morphologies of branching, cross-linking and common wall sharing as a whole, and each of the plurality of CNT need not have all of those structural morphologies. In some embodiments, at least some of the plurality of CNT are branched, at least some of the plurality of CNT are cross-linked, and at least some of the plurality of CNT share a common wall.

As CNS (B), one produced by a known method may be used, or a commercial product may be used. As the method for producing CNS (B), for example, the method described in JP-A-2015-533187 may be mentioned. In this method, CNS (B) is formed on a growth substrate (fiber material, etc.), and CNS (B) is removed from the growth substrate having CNS (B) attached, to obtain CNS (B) having no growth substrate. As commercial products of CNS (B), for example, the Athlos series by Cabot Corporation may be mentioned.

(Other components)

As other components, a polymer other than the aforementioned fluororesin (hereinafter referred to also as "other polymer"), a filler other than the aforementioned carbon nanostructure (hereinafter referred to also as "other filler") and an additive other than the polymer and filler, may be exemplified. Two or more of these components may be used in combination.

Other polymer is used, for example, to provide strength.

As other polymer, polyaryletherketone, polyphenylene sulfide, liquid crystal polymer (LCP), polyamide, polyetherimide, thermoplastic polyimide, etc. may be mentioned.

Other filler is used, for example, to add stiffness.

As other filler, carbon fiber, cellulose fiber, cellulose nanofiber, potassium titanate fiber, glass fiber, etc. may be mentioned.

As the additive other than the polymer and filler, a pigment, a plasticizer, a processing aid, a heat stabilizer, a light absorber, a flexibility-imparting additive such as a polyolefin elastomer, etc. may be mentioned.

In the present resin composition, the content of the fluororesin is preferably from 10 to 99.999 mass%, more preferably from 60 to 99.99 mass%, further preferably from 80 to 99.9 mass%, to the entire mass of the present resin composition. When the content of the fluororesin is at least the above lower limit value, the moldability and flexibility will be more excellent, and when the content of the fluororesin is at most the above upper limit value, the electrical conductivity will be more excellent.

The content of CNS (A) is preferably from 0.001 to 10 mass%, more preferably from 0.005 to 8 mass%, further preferably from 0.1 to 5 mass%, to the entire mass of the present resin composition. When the content of CNS (A) is at least the above lower limit value, the electrical conductivity will be more excellent, and when it is at most the above upper limit value, the moldability and flexibility will be more excellent.

The total content of the fluororesin and CNS (A) is, from the viewpoint of the electrical conductivity, preferably at least 50 mass%, more preferably at least 70 mass%, further preferably at least 90 mass%, and may be 100 mass%, to the entire mass of the present resin composition.

The content of other polymer is preferably at most 90 mass%, more preferably at most 50 mass%, further preferably at most 30 mass% and may be 0 mass%, to the entire mass of the present resin composition. When the content of other polymer is at most the above upper limit value, the electrical conductivity will be more excellent.

In a case where the present resin composition contains other polymer, the content of other polymer is preferably at least 1 mass%, more preferably at least 5 mass%, to the entire mass of the present resin composition. When the content of other polymer is at least the above lower limit value, the strength will be more excellent.

The content of other filler is preferably at most 50 mass%, more preferably at most 40 mass%, further preferably at most 30 mass%, and may be 0 mass%, to the entire mass of the present resin composition. When the content of other filler is at most the above upper limit value, the moldability and flexibility will be more excellent.

In a case where the present resin composition contains other filler, the content of other filler is preferably at least 1 mass%, more preferably at least 5 mass%, to the entire mass of the present resin composition. When the content of other filler is at least the above lower limit value, the strength will be more excellent.

The volume resistivity of the present resin composition is preferably at most $10^7$ $\Omega \cdot$cm, more preferably at most $10^6$ $\Omega \cdot$cm, further preferably at most $10^5$ $\Omega \cdot$cm. The lower the volume resistivity of the present resin composition, the better, and the lower limit is not particularly limited, but is, for example, $10^{-3}$ $\Omega \cdot$cm. The volume resistivity is an index for the electrical conductivity. When the volume resistivity of the present resin composition is at most the above upper limit value, it is useful for applications where electrical conductivity is required.

The volume resistivity of the present resin composition is measured with respect to a sheet of 1 mm in thickness molded from the present resin composition. The detailed preparation method of the sheet is as described in Examples given later.

The present resin composition preferably has a volume resistivity of at most $10^7$ $\Omega \cdot$cm, and the content of CNS (A) is preferably from 0.001 to 10 mass%, to the entire mass of the present resin composition. By good dispersion of CNS (A) in the fluororesin, a volume resistivity of at most $10^7$ $\Omega \cdot$cm can be achieved even when the content of CNS (A) is as low as at most 10 mass%. More preferred volume resistivity and CNS (A) content are as described above.

From the viewpoint of electrical conductivity, the number of folds resistance of the present resin composition is preferably at least 6,000 times, more preferably at least 10,000 times, further preferably at least 12,000 times. The higher the number of folds resistance of the present resin composition, the better, and the upper limit is not particularly limited, but is, for example, 8,000,000 times. The number of folds resistance is an index for flexibility. When the number of folds resistance of the present resin composition is at least the above lower limit value, it is useful for applications requiring flexibility.

The number of folds resistance of the present resin composition is measured with respect to a test specimen of 0.23 mm in thickness, 130 mm in length and 13 mm in width, molded from the present resin composition. The detailed preparation method of the test specimen is as described in Examples given later.

MFR of the present resin composition is preferably at least 1.5 g/10 min., more preferably at least 1.8 g/10 min., further preferably at least 2.0 g/10 min. MFR of the present resin composition is preferably at most 70 g/10 min.,

more preferably at most 50 g/10 min. When MFR of the present resin composition is at least the above lower limit value, the molding processability will be more excellent, and when MFR of the present resin composition is at most the above upper limit value, the flexural resistance will be more excellent.

MFR of the resin composition can be adjusted by MFR of the fluororesin, the content of the fluororesin in the resin composition, and the kneading conditions at the time of producing the resin composition.

MFR of a resin composition is a value at a temperature higher by at least 20°C than the melting point of the resin composition (in a case where the resin composition contains a plurality of components having different melting points, the highest melting point among those melting points). As the measurement conditions for MFR (measurement temperature and load), typically the measuring conditions corresponding to the contained fluororesin will be adopted.

[Method for producing resin composition]

The method for producing a resin composition in accordance with one embodiment of the present invention (hereinafter referred to also as the present production method) comprises dry-mixing or melt-kneading a fluororesin and CNS (B). As the case requires, other components may be dry-mixed or melt-kneaded together with the fluororesin and CNS (B).

The fluororesin, CNS (B) and other components are, respectively, as described above. In the case of melt kneading, as the fluororesin, a melt-moldable fluororesin is usually used.

The amount of the fluororesin is, to the entire mass of the resin composition to be produced, preferably from 10 to 99.999 mass%, more preferably from 60 to 99.99 mass%, further preferably from 80 to 99.9 mass%. When the amount of the fluororesin is at least the above lower limit value, the moldability and flexibility will be more excellent, and when the amount is at most the above upper limit value, the electrical conductivity will be more excellent.

The amount of CNS (B) is, to the entire mass of the resin composition to be produced, preferably from 0.001 to 10 mass%, more preferably from 0.005 to 8 mass%, further preferably from 0.1 to 5 mass%. When the amount of CNS (B) is at least the above lower limit value, the electrical conductivity will be more excellent, and when it is at most the above upper limit value, the moldability and flexibility will be more excellent.

The total content of the fluororesin and CNS (A) is, from the viewpoint of the electrical conductivity, to the entire mass of the resin composition to be produced, preferably at least 50 mass%, more preferably at least 70 mass%, further preferably at least 90 mass%, and may be 100 mass%.

The amount of other polymer is, to the entire mass of the resin composition to be produced, preferably at most 90 mass%, more preferably at most 50 mass%, further preferably at most 30 mass%, and may be 0 mass%. When the content of other polymer is at most the above upper limit value, the electrical conductivity will be more excellent.

In a case where the resin composition contains other polymer, the content of other polymer is, to the entire mass of the resin composition to be produced, preferably at least 1 mass%, more preferably at least 5 mass%. When the content of other polymer is at least the above lower limit value, the strength will be more excellent.

The amount of other filler is, to the entire mass of the resin composition to be produced, preferably at most 50 mass%, more preferably at most 40 mass%, further preferably at most 30 mass%, and may be 0 mass%. When the content of other filler is at most the above upper limit value, the moldability and flexibility will be more excellent.

In a case where the resin composition contains other filler, the content of other filler is, to the entire mass of the resin composition to be produced, preferably at least 1 mass%, more preferably at least 5 mass%. When the content of other filler is at least the above lower limit value, the strength will be more excellent.

As the dry-mixing method, a method of using a dry mixer such as a double cone blender, a V blender, an air blender, a gravity blender, a ribbon mixer, a screw mixer, a paddle mixer or a vibration mixer, may be mentioned.

The temperature at the time of dry-mixing is, for example, from -30 to 140°C.

As the melt-kneading method, a method of using a known melt-kneading machine, may be mentioned.

As the melt-kneading machine, one equipped with a screw is preferred, and, for example, a twin-screw extruder, a single-screw extruder, a kneader, or a mixer may be mentioned.

In the method of using the melt-kneading machine equipped with a screw, for example, a fluororesin and CNS (B) are fed into the base end of the screw, and by the rotation of the screw, they are sent to the tip end of the screw while being melt-kneaded, whereby the molten state kneaded material is continuously or intermittently discharged from the tip side of the screw without being circulated by being transferred to the base end of the screw. The molten state kneaded material discharged from the tip side of the screw is usually extruded in the form of a strand from a die provided at the forward end of the equipment, and then cut by a pelletizer to form a pellet-like resin composition. In this method, the kneaded material does not stay in the equipment, and no more shear force than necessary is applied to the kneaded material.

As the melt-kneading machine, a twin-screw extruder is preferred from the standpoint of productivity.

In a case where the resin composition is produced by melt-kneading, the following Method A or B is preferred as the method of producing the resin composition. According to Method A or B, at least some of the crosslinked bonds of CNS (B) are broken, and a plurality of CNT (CNS (A)) thereby generated, will be well dispersed in the fluororesin, whereby excellent electrical conductivity can easily be expressed even if the amount of CNS (B) is small.

Method A: A method wherein a fluororesin and CNS (B) are melt-kneaded in a twin-screw extruder,

the twin-screw extruder has a screw with a plurality of screw elements, including at least two kneading disc elements, mounted on a shaft, and a barrel incorporating two such screws, and
the kneading area ratio, which is a value having the total length (mm) of said at least two kneading disc elements divided by the total length (mm) of the screw, is greater than 0.1.

Method B: A method in which a portion of the fluororesin and CNS (B) are melt-kneaded to prepare a master batch, and the obtained master batch and the remaining portion of the fluororesin are melt kneaded.

(Twin screw extruder)

The twin-screw extruder in Method A is provided with two screws, a barrel incorporating the two screws, a material feed port in the barrel, and a die at the downstream end of the barrel. The twin-screw extruder may further be provided with a vacuum vent in the barrel, as the case requires.

The twin-screw extruder in Method A may be a co-rotating twin-screw extruder in which two screws passed through a cylinder in a barrel with an inverted V-shaped through-hole, are rotated in the same direction, or may be an inter-directional extruder in which two screws are rotated in different directions. As the twin-screw extruder, a co-rotating twin-screw extruder is preferred because it is excellent in conveying, melting/kneading, and separation (dehydration) capabilities, it can also process materials continuously, and it is also excellent in efficiency in the resin composition producing process.

The engagement of the two screws may be non-intermeshing, partially intermeshing, or fully intermeshing.

As a screw, one capable of incorporating the after-described kneading area at any position on the screw, is used. Thus, as the screw, one in which a plurality of screw elements, including at least two kneading disk elements, mounted on a shaft, is used.

Screw elements have the same cross-sectional shape in the direction perpendicular to the shaft. In screw elements, specific functions arise depending on the number of strips, meaning the number of flights, and the torsional angle at which the cross-sectional shape in the direction perpendicular to the shaft rotates around the shaft. As screw elements, depending on functions, rotary elements, kneading disk elements, and mixing elements may be mentioned.

The rotary elements are screw elements having torsional angles that rotate continuously around a shaft and have conveying capacity.

The kneading disc elements are screw elements constituted by a plurality of plate-like discs with no torsional angle.

The mixing elements are screw elements having a notch formed in a full flight element with a forward thread, or screw elements having a notch formed in a full flight element with a reverse thread. The mixing elements may or may not be self-cleaning.

As the screws for the twin-screw extruder in Method A, ones constituted by rotary elements, kneading disk elements and mixing elements, are suitably used.

In Method A, the kneading area ratio is greater than 0.1, preferably greater than 0.15, more preferably greater than 0.18. Further, the kneading area ratio is preferably at most 0.45, more preferably at most 0.30. When the kneading area ratio is at least the above lower limit value, at least some of the crosslinked bonds of CNS (B) will be broken and a plurality of CNT thereby formed will be well dispersed in the fluororesin, whereby excellent electrical conductivity will be easily achieved even with a small amount of CNS (B). When the kneading area ratio is at most the above upper limit value, excessive shear heating to the fluororesin by the screws and internal heating due to deformation and compression will be suppressed, whereby the decomposition of the fluororesin beyond necessity will be suppressed.

In Method A, LID is at least 20, more preferably from 30 to 100, from such a viewpoint that the fluororesin and CNS (B) can be efficiently melt-kneaded.

"L/D" is a value obtained by dividing the total screw length L (mm) by the screw diameter D (mm).

The twin-screw extruder in Method A preferably has one or more melt zones in which at least two of at least one of the mixing elements and the kneading disk elements among the screw elements, are continuously arranged.

As the twin-screw extruder has a melt zone, the fluororesin, etc. will be melt-kneaded.

Further, as the twin-screw extruder has a melt zone, the residence time of the fluororesin, etc. in the twin-screw extruder is increased by at least one of the mixing elements and the kneading disk elements, of which two or more are continuously arranged. And, at the time when the fluororesin, etc. pass through the melt zone, shear heat is given to the fluororesin, etc. by the screws, and the fluororesin become in a molten state, whereby adhesion between the fluororesin and the screws will be improved, and the occurrence of vent-up will be suppressed.

The number of melt zones is preferably one or two, and more preferably one. When the number of melt zones is at most two, the shear heating or deformation-compression action by the screws on the fluororesin will be suppressed, and the decomposition of the fluororesin beyond necessity will be suppressed.

A barrel is one having a plurality of barrel blocks connected in series.

In the barrel blocks, a through hole corresponding to the cross-sectional shape of the screw is formed.

A vacuum vent is installed for the purpose of removing low-boiling components contained in the fluororesin, etc. at the time when the fluororesin, etc. are melt-kneaded by the screws of the twin-screw extruder.

The vacuum vents can be installed on the twin-screw extruder, for example, by using barrel blocks having vacuum vents attached. Vacuum vents can be installed on the plurality of barrel blocks.

In a case where there is only one material feed port, the material feed port is located upstream from the most upstream kneading area.

In a case where there are a plurality of material feed ports, the first material feed port which is located at the most upstream side among the material feed ports, may be provided on the upstream side than the kneading area located at the most upstream side, and other material feed ports may be provided on the downstream side than the kneading area located at the most upstream side. The fluororesin is preferably supplied from the first material feed port. CNS (B) and other components may be supplied from the second and subsequent material feed ports.

In a case where the kneaded material is to be pelletized, as a die, one capable of extruding the mixture to form a strand is preferred.

The number of discharge ports in the die may be one or a plurality. As the die, one having several to several tens discharge ports is preferred, because a plurality of strands are formed, and the productivity is high.

(Method A)

In Method A, the fluororesin and CNS (B) are first fed into the material feed port of the twin-screw extruder as described above. The fluororesin and CNS(B) fed from the material feed port of the twin-screw extruder are melt-kneaded in the twin-screw extruder.

The kneaded material in a molten state obtained by melt-kneading by the twin-screw extruder, is extruded, for example, from a die to form a strand. The strand is cut, for example, by a pelletizer. Thus, pellets of the resin composition are obtained.

In Method A, the effective shear rate quantity obtained by the following formula (1) is preferably greater than 8, more preferably greater than 11, and even more preferably greater than 12. Further, the effective shear rate quantity is preferably at most 30, more preferably at most 23. When the effective shear rate quantity is at least the above lower limit value, it will be easier to obtain excellent electrical conductivity. When the effective shear rate quantity is at most the above upper limit value, excessive shear heating of the fluororesin by the screws and internal heating due to deformation and compression will be suppressed, and decomposition of the fluororesin beyond necessity will be suppressed.

$$\text{Effective shear rate quantity} = \text{kneading area ratio} \times \text{screw shear rate (seconds}^{-1})$$
$$\text{obtainable by the following formula (2)} \quad (1)$$

$$\text{Screw shear rate} = 3 \times \text{barrel diameter (mm)} \times \text{screw rotation speed (rpm)} / 60$$
$$(2)$$

The screw shear rate is preferably at least 40 seconds$^{-1}$, more preferably at least 100 seconds$^{-1}$. Further, the screw shear rate is preferably less than 400 seconds$^{-1}$, more preferably less than 250 seconds$^{-1}$. When the screw shear rate is at least the above lower limit value, the fluororesin and CNS (B) will be sufficiently melt-kneaded. When the screw shear rate is at most the above upper limit value, shear heating due to screw shear will be reduced, and thus thermal decomposition of the fluororesin will be suppressed.

The screw rotation speed is preferably from 40 to 500 rpm, more preferably from 70 to 400 rpm. If the screw rotation speed is within the above range, the fluororesin and CNS(B) will be sufficiently melt-kneaded, while suppressing the decomposition of the fluororesin due to screw shear.

The setting temperature of the barrel is preferably at least the melting point of the fluororesin, more preferably at least the melting point of the fluororesin + 15°C. Further, the setting temperature of the barrel is preferably at most the melting point of the fluororesin + 140°C, more preferably at most the melting point of the fluororesin + 130°C. When the setting temperature of the barrel is at least the above lower limit value, melting of the fluororesin will be promoted, and the decomposition of the fluororesin beyond necessity due to the cutting of the molecular chains of the fluororesin by the screw will be suppressed. When the setting temperature of the barrel is at most the above upper limit value, oxidative decomposition of the fluororesin due to heat will be suppressed.

The setting temperature for each of a plurality of barrel blocks may be the same or different. The preferred setting temperature for each of the plurality of barrel blocks is the same as described above.

The setting temperature of the die is preferably at least the melting point of the fluororesin + 10°C and less than the melting point of the fluororesin + 150°C, more preferably at least the melting point of the fluororesin + 20°C and at most the melting point of the fluororesin + 130°C, further preferably at least the melting point of the fluororesin + 30°C and at most the melting point of the fluororesin + 100°C. When the setting temperature of the die is at least the above lower limit value, the stability of the strand will be increased as the melt fracture from the discharge port of the die will be reduced. When the setting temperature of the die is at most the above upper limit value, decomposition of the fluororesin will be suppressed.

The conditions under which the molten state of the kneaded material is extruded, are not particularly restricted, and known conditions may be suitably employed.

The diameter of the strand is preferably from 1 to 10 mm, more preferably from 1 to 6 mm, further preferably from 2 to 5 mm.

The strand is preferably cooled. The strand may be air-cooled or water-cooled. As the air cooling method, a method of using air blower, etc., or a method of cooling during conveyance by a conveying means, may be mentioned.

The conveying means for the strand is not particularly restricted, so long as the strand can be thereby conveyed. As the conveying means, a belt conveyor, a mesh conveyor, a net conveyor, pick-up by a pelletizer, etc. may be mentioned.

As the water cooling method, a method of immersing the strand in a cooling solution such as water filled in a container, a method of spraying the cooling solution on the strand, etc. may be mentioned.

The temperature of the strand after cooling (i.e. the temperature of the strand at the time of cutting) is preferably from 35 to 200°C, more preferably from 50 to 150°C, further preferably from 70 to 120°C.

A pelletizer is one to cut a strand into pellets. The pelletizer is usually equipped with a strand cutter, and by the strand cutter, a cooled strand is cut into pellets.

The strand cutter is equipped with, for example, a stationary blade and a rotating blade. The strand is sandwiched between the stationary blade and the rotating blade, whereby it is cut into a predetermined length to obtain pellets.

(Method B)

In Method B, as a method of melt-kneading a portion of the fluororesin and CNS (B) (hereinafter referred to also as primary kneading), a method of using the above-mentioned known melt-kneading machine may be mentioned.

The amount of the fluororesin subjected to the primary kneading is preferably from 70 to 99.9 mass%, more preferably from 85 to 99 mass%, to the entire mass of the kneaded material obtainable by the primary kneading. When the amount of the fluororesin subjected to the primary kneading is at least the above lower limit value, the dispersibility of CNS will be more excellent, and when the amount is at most the above upper limit value, the electrical conductivity will be more excellent.

The amount of CNS (B) subjected to the primary kneading is preferably the entire amount of CNS (B) used in the production of the resin composition.

The temperature at the time of the primary kneading is preferably at least the melting point of the fluororesin, more preferably at least the melting point of the fluororesin + 15°C. Further, the temperature at the time of the primary kneading is preferably at most the melting point of the fluororesin + 140°C, more preferably at most the melting point of the fluororesin + 130°C. When the temperature at the time of the primary kneading is at least the above lower limit value, melting of the fluororesin is accelerated and decomposition of the fluororesin beyond necessity due to the breakage of the molecular chains of the fluororesin by the screw will be suppressed. When the temperature at the time of the primary kneading is at most the above upper limit value, oxidative decomposition of the fluororesin due to heat will be suppressed.

The shear rate at the time of the primary kneading is preferably at least 20 seconds$^{-1}$, more preferably at least 60 seconds-'. Further, the shear rate at the time of the primary kneading is preferably less than 350 seconds$^{-1}$, more preferably less than 200 seconds$^{-1}$. When the shear rate at the time of primary kneading is at least the above lower limit value, the fluororesin and CNS (B) will be sufficiently melt-kneaded. When the shear rate at the time of the primary kneading is at most the above upper limit value, shear heating due to shear will be reduced, whereby thermal decomposition of the fluororesin will be suppressed.

The screw rotation speed at the time of the primary kneading is preferably from 20 to 450 rpm, more preferably from 50 to 350 rpm. When the screw rotation speed is within the above range, the fluororesin and CNS (B) will be sufficiently melt-kneaded, while suppressing the decomposition of the fluororesin due to screw shear.

In the case where the primary kneading is conducted by a twin-screw extruder, as in Method A, it is preferred to set the kneading area ratio to be greater than 0.1 (even greater than 0.15), and the effective shear rate to be greater than 8. The more preferred kneading area ratio and effective shear rate are, respectively, as described above.

As the method of melt-kneading the obtained master batch and the remaining portion of the fluororesin (hereinafter referred to also as secondary kneading), a method of using the above-mentioned known melt-kneading machine may be mentioned.

The temperature at the time of conducting the secondary kneading is preferably at least the melting point of the fluororesin, more preferably at least the melting point of the fluororesin + 15°C. Further, the temperature at the time of conducting the secondary kneading is preferably at most the melting point of the fluororesin + 140°C, more preferably at most the melting point of the fluororesin + 130°C. When the temperature at the time of conducting the secondary kneading is at least the above lower limit value, melting of the fluororesin will be accelerated, whereby decomposition of the fluororesin due to the breakage of its molecular chain by the screw will be suppressed. When the temperature at the time of conducting the secondary kneading is at most the above upper limit value, oxidative decomposition of the fluororesin due to heat will be suppressed.

The shear rate at the time of conducting the secondary kneading is preferably at least 20 seconds-', more preferably at least 60 seconds-'. Further, the shear rate at the time of conducting the secondary kneading is preferably less than 350 seconds-', more preferably less than 200 seconds-'. When the shear rate at the time of conducting the secondary kneading is at least the above lower limit value, the fluororesin and CNS (B) will be sufficiently melt-kneaded. When the shear rate at the time of conducting the secondary kneading is at most the upper limit value, the shear heating due to shear will be reduced, whereby the thermal decomposition of the fluororesin will be suppressed.

The screw rotation speed at the time of conducting the secondary kneading is preferably from 20 to 450 rpm, more preferably from 50 to 350 rpm. When the screw rotation speed is within the above range, the fluororesin and CNS (B) will be sufficiently melt-kneaded while suppressing the decomposition of the fluororesin due to screw shear.

In the case where the secondary kneading is conducted by a twin-screw extruder, as in Method A, it is preferred to set the kneading area ratio to be greater than 0.1 (even greater than 0.15) and the effective shear rate to be greater than 8.

[Molded body]

The molded body according to one embodiment of the present invention is a molded body of the present resin composition.

The molded body of the present embodiment is obtainable by molding the present resin composition.

As the molding method, an extrusion molding method, an injection molding method, a hollow molding method, a compression molding method (press molding method), etc. may be mentioned. In the extrusion molding, molding of pipes, wires, films, sheets, etc. is included.

The thickness of the molded body is preferably at most 1 mm, more preferably from 0.005 to 0.8 mm, further preferably from 0.010 to 0.5 mm. When the thickness of the molded body is at most 1 mm, the flexibility of the molded body will be more excellent. When the thickness of the molded body is at least 0.005 mm, the handling efficiency will be excellent.

As applications of the molded material, a heater cable, an automotive fuel hose, a heat transfer roll, a seamless belt, a copy roll, a conductive sheet, a tube connector, a sheath of wire and tube, etc. may be mentioned. Since the molded body of the present embodiment is excellent in electrical conductivity and flexibility, a heater cable is preferred. Further, it is also suitable for use as a fuse or surface heating element. As other applications, especially for automotive components, a bumper, a fender, a door panel, a trunk lid, a front panel, a rear panel, a roof panel, a hood, a pillar, a side molding, a garnish, a wheel cap, a door handle, a hood bulge, a fuel lid, a sliding part such as a gear or bearing, and other automotive exterior parts such as various spoilers, may also be mentioned as suitable applications of the present composition because electrical conductivity and impact resistance are important.

Further, as examples of suitable applications of the present composition, in addition to automotive exterior parts, for example, components, sheets, films, etc. requiring electrical conductivity, including electrical, electronic and office automation equipment, wearable devices, may be mentioned. For example, it is also suitably used for IC chips and IC trays used in semiconductors, or wafers, chemical cleaning containers, and internal parts of hard disks used in computers, for example, for the purpose of preventing contaminants such as dust from mixing. On the other hand, it is also suitably used for applications where electrical conductivity is required to provide electromagnetic shielding properties, for example, housings of notebook PCs, housings of PDAs, substrates for pachinko parts, camera shutters, electronic devices for medical use, housings of cell phones, etc.

EXAMPLES

In the following, the present invention will be described in further detail with reference to Examples, but the present invention is not limited to these Examples. The "parts" indicates "parts by mass".

Ex. 1 to 7 and Ex. 12 to 16 are Examples of the present invention, and Ex. 8 to 11 are Comparative Examples.

(Evaluation methods)

<MFR>

MFR of the resin composition was measured in accordance with ASTM-D3159 using a melt indexer (manufactured by Takara Thermistor). Specifically, in Ex. 1 to 6 and 8 to 10, the resin composition was loaded into a cylinder with an inner diameter of 9.5 mm, held at 297°C for 5 minutes, and then extruded through an orifice with an inner diameter of 2.1 mm and a length of 8 mm under a piston load of 49 N at that temperature, whereby the extrusion rate (g/10 min) was adopted as MFR. In Ex. 7 and 11, MFR was measured in the same manner as above, except that the measurement temperature was changed to 230°C and the load to 21.2 N. MFR of the fluororesin used in each Ex. was obtained also by the same method.

<Preparation of molded bodies for evaluation>

Using a press molding machine manufactured by Tester Sangyo Co., Ltd., molded bodies for evaluation, of 130 mm × 130 mm × 0.23 mm in thickness and 130 mm × 130 mm × 1 mm in thickness, were obtained by pressing under the conditions of pre-melting time: 10 minutes, pressing time: 5 minutes, pressing pressure: 5 MPa, and molding temperature: 300°C.

<Tensile properties>

From the 1 mm-thick molded body for evaluation, a dumbbell-shaped specimen as specified in ASTM-D638 TypeV was cut out. With respect to this specimen, the tensile strength and the tensile elongation were measured by using TENSILON (manufactured by A&D, model RTF-1350) under conditions of load cell rating: 1 kN, distance between chucks: 25.4 mm, and speed: 50 mm/min., in accordance with ASTM-D638.

<Volume resistivity>

From the 1 mm-thick molded body for evaluation, a specimen of 5 cm in width and 5 cm in length was cut out. With respect to this specimen, using a low resistivity meter (manufactured by Mitsubishi Chemical Analytec, Model MCP-T700), the volume resistivity was obtained in accordance with JIS K7194.

<Number of folds>

From the 0.23 mm thick molded body for evaluation, a specimen of 130 mm in length and 13 mm in width was cut out. With respect to this specimen, using a MIT bending test apparatus (manufactured by Toyo Seiki Co., Ltd.), the number of folds (the number of times the specimen could be bent back and forth until it broke) was determined in accordance with JIS P8115.

(Materials used)

Fluororesin 1: ETFE, a copolymer of TFE units/ethylene units/(perfluorobutyl) ethylene units = 54/46/1.4 (molar ratio), melting point: 260°C, MFR: 10 g/10 min.
Fluororesin 2: A powder made by grinding fluororesin 1. Average particle diameter: 30 $\mu$m.
Fluororesin 3: ETFE, a copolymer of TFE units/ethylene units/hexafluoropropylene units/(perfluorobutyl) ethylene units/itaconic anhydride units = 47.5/43.4/8.3/0.6/0.3 (molar ratio), melting point: 180°C, MFR: 6 g/10 min.
Fluororesin 4: KF Polymer #850 (PVDF) manufactured by Kureha Corporation
Fluororesin 5: PFA, a copolymer of TFE units/perfluoro(propyl vinyl ether) units = 98/2 (molar ratio), melting point: 305°C, MFR: 36 g/10 min.
Fluororesin 6: Teflon FEP 9494J (FEP) manufactured by Chemours.

CNS: carbon nanostructure containing a plurality of carbon nanotubes that are branched, cross-linked and share a common wall with each other, manufactured by Cabot, "Athlos 2000".
CNT: carbon nanotubes (not branched, not cross-linked and not sharing a common wall with each other), "NC7000" manufactured by Nanocyl, multi-walled carbon nanotubes, diameter: 9.5 nm, aspect ratio: 160.

CB: carbon black, DENKA Black manufactured by Denka, acetylene black, average particle size: 38 nm, aspect ratio: from 1.0 to 1.7.

xGnP: Nanographene xGnP M-25, manufactured by New Metals and Chemicals Corporation.

(Twin screw extruder)

As a twin-screw extruder, a fully intermeshing co-rotating twin-screw extruder (KZW15TW-45MG-NH (-1100), manufactured by Technovel), was prepared.

Ratio of screw total length L to screw diameter D: L/D: 45,
Screw diameter: 15 mm,
Number of barrel blocks: 6,
Strand die head: manufactured by Technobell, STD321 (diameter of discharge port in die: 4 mm, number of discharge ports: 4).

(Ex. 1)

Fig. 1 is a schematic diagram of the twin-screw extruder used in Ex. 1.

The twin-screw extruder 10 has two screws (not shown), a barrel 12 incorporating the two screws, a material feed port 16 provided in the barrel 12, and a strand die head 18 provided at the downstream end of the barrel 12.

The barrel 12 has a first barrel block C1, a second barrel block C2, a third barrel block C3, a fourth barrel block C4, a fifth barrel block C5, and a sixth barrel block C6, in the order from the upstream side.

The material feed port 16 is located in the first barrel block C1.

The twin-screw extruder 10 has a melt zone (not shown) from part of the fourth barrel block C4 to part of the fifth barrel block C5. All screw elements other than the melt zone are rotary elements. The melting zone consists of two or more kneading disk elements. The number of kneading disk elements was set so that the kneading area ratio would be the values shown in Table 1.

Ninety-nine parts of fluororesin 1 and one part of CNS were fed through the material feed port 16 of the twin-screw extruder 10 and melt-kneaded in the twin-screw extruder 10. The set temperatures of the respective barrel blocks C1 to C6 and strand die head 18 were as follows: C1 = 285°C, C2 = 285°C, C3 = 285°C, C4 = 285°C, C5 = 285°C, C6 = 285°C, strand die head 18 = 290°C. The screw rotation speed was set at 200 rpm. The effective shear rate quantities are shown in Table 1.

The kneaded material melt-kneaded by the twin-screw extruder 10 was extruded from the strand die head 18 to form a strand. After water-cooling the strand to $20 \pm 3$°C in a water tank, it was cut by a pelletizer to obtain pellets of the resin composition.

With respect to the obtained pellets, the above evaluations were conducted. The results are shown in Table 1.

(Ex. 2 to 6, 8 to 10)

Pellets of the resin composition were obtained in the same manner as in Ex. 1, except that the materials fed through the material feed port 16 of the twin-screw extruder 10 and their blending ratios, kneading area ratio, and effective shear rate were made to be as shown in Table 1, and the above evaluations were conducted. The results are shown in Table 1.

Here, Ex. 5 is an example wherein secondary kneading was conducted by using the pellets obtained in Ex. 4, and Ex. 6 is an example wherein secondary kneading was conducted by using only the pellets obtained in Ex. 4.

(Ex. 7)

The materials shown in Table 1 were melt-kneaded in a lab-plast mill manufactured by Toyo Seiki Co., Ltd. The blending ratio was as shown in Table 1; 30 g of the entire amount was fed into the lab-plast mill in one batch, and melt-kneaded for 10 minutes under conditions of screw speed: 50 rpm and temperature: 240°C to obtain a resin composition as a kneaded product.

With respect to the obtained resin compositions, the tensile properties and volume resistivity were evaluated. The results are shown in Table 1.

(Ex. 11)

The resin composition was obtained in the same manner as in Ex. 7, except that the materials to be melt-kneaded were made to be as shown in Table 1. With respect to the obtained resin compositions, MFR, volume resistivity, and number of folds were evaluated. The results are shown in Table 1.

(Ex. 12 to Ex. 16)

The resin composition was obtained in the same manner as in Ex. 7, except that the materials to be melt-kneaded were made to be as shown in Table 2 and the kneading temperatures were set to be the temperatures as shown in Table 2. With respect to the obtained resin compositions, the volume resistivity was evaluated. Here, the press temperature of the molded body for evaluation used for the measurement of the volume resistivity was the temperature shown in Table 2. The results are shown in Table 2.

[Table 1]

| Materials (parts) | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|---|
| Materials (parts) | | Fluororesin 1 | 99 | | 99.5 | 99 | 50 | | | 85 | | 99 | |
| | | Fluororesin 2 | | 99 | | | | | | | 85 | | |
| | | Fluororesin 3 | | | | | | | 99 | | | | 99 |
| | | Resin composition in Ex. 4 | | | | | 50 | 100 | | | | | |
| | | CNS | 1 | 1 | 0.5 | 1 | | | 1 | | | | |
| | | CNT | | | | | | | | | | 1 | |
| | | CB | | | | | | | | 15 | 15 | | |
| | | xGnP | | | | | | | | 15 | 15 | | 1 |
| Keading area ratio | | | 0.26 | 0.26 | 0.16 | 0.16 | 0.16 | 0.16 | - | 0.26 | 0.26 | 0.16 | - |
| Effective shear rate | | | 19 | 19 | 12 | 12 | 12 | 12 | - | 19 | 19 | 12 | - |
| Evaluations | | MFR (g/10 min) | 2.2 | 2.3 | 5.7 | 3.4 | 7.2 | 5.2 | - | 1.3 | 1.4 | 2.5 | - |
| | | Tensile strength (MPa) | 49 | 51 | 47 | 46 | 49 | 47 | 44 | 35 | 33 | - | 41 |
| | | Tensile elongation (%) | 358 | 358 | 387 | 367 | 378 | 359 | 393 | 327 | 313 | - | 441 |
| | | Volume resistivity ($\Omega \cdot$cm) | $4.8 \times 10^0$ | $2.7 \times 10^1$ | $3.7 \times 10^4$ | $8.5 \times 10^4$ | $8.8 \times 10^5$ | $8.8 \times 10^0$ | $5.4 \times 10^{-1}$ | $8.7 \times 10^0$ | $3.3 \times 10^1$ | $1.0 \times 10^{10}$ | $1.2 \times 10^{15}$ |
| | | Number of folds (time) | 12725 | 13348 | 14121 | - | 14865 | 6211 | - | 5581 | 5307 | 6821 | - |

[Table 2]

|  |  | Ex. 12 | Ex. 13 | Ex. 14 | Ex. 15 | Ex. 16 |
|---|---|---|---|---|---|---|
| Materials (parts) | Fluororesin 4 | 99 |  |  | 99 |  |
|  | Fluororesin 5 |  | 99 |  |  | 99 |
|  | Fluororesin 6 |  |  | 99 |  |  |
|  | CNS | 1 | 1 | 1 | 1 | 0.1 |
| Melting temperature (°C) |  | 240 | 340 | 340 | 340 | 340 |
| Press temperature (°C) |  | 240 | 340 | 340 | 340 | 340 |
| Volume resistivity ($\Omega \cdot$cm) |  | $8.2 \times 10^0$ | $1.0 \times 10^1$ | $1.5 \times 10^1$ | $7.8 \times 10^0$ | $5.2 \times 10^4$ |

The resin compositions in Ex. 1 to 7 were excellent in electrical conductivity, even though the CNS content was as low as at most 1 mass%. Further, they were excellent also in flexibility (number of folds) and tensile properties (tensile strength and tensile elongation).

The resin compositions in Ex. 12 to 16, in which the type of fluoropolymer was changed, were also excellent in electrical conductivity, although the CNS content was as low as at most 1 mass%.

On the other hand, the resin compositions in Ex. 8 to 9, which did not contain CNS and contained 15 mass% of CB, were inferior in flexibility and tensile properties.

The resin compositions in Ex. 10 to 11, which did not contain CNS and contained 1 mass% of CNT or xGnP, were inferior in electrical conductivity.

The entire disclosure of Japanese Patent Application No. 2021-087368 filed on May 25, 2021 including specification, claims, drawings and summary is incorporated herein by reference in its entirety.

REFERENCE SYMBOLS

10: Twin-screw extruder, 12: Barrel, 16: Material feed port, 18: Strand die head, C1: First barrel block, C2: Second barrel block, C3: Third barrel block, C4: Fourth barrel block, C5: Fifth barrel block, C6: Sixth barrel block.

**Claims**

1. A resin composition comprising a fluororesin and a carbon nanostructure, wherein the carbon nanostructure includes a plurality of carbon nanotubes that are branched and share a common wall with each other.

2. The resin composition according to Claim 1, wherein the fluororesin is a polymer containing units based on tetrafluoroethylene.

3. The resin composition according to Claim 1 or 2, wherein the content of the carbon nanostructure is from 0.001 to 10 mass% to the entire mass of the resin composition.

4. The resin composition according to any one of Claims 1 to 3, wherein the volume resistivity, as measured in accordance with JIS K7194, for a sheet of 1 mm in thickness molded from the resin composition, is at most $10^7 \ \Omega \cdot$cm.

5. The resin composition according to any one of Claims 1 to 4, which further comprises a filler other than the carbon nanostructure.

6. The resin composition according to any one of Claims 1 to 5, which further comprises a polymer other than the fluororesin.

7. The resin composition according to any one of Claims 1 to 6, wherein the number of folds resistance, as measured in accordance with JIS P8115, for a test specimen of 0.23 mm in thickness, 130 mm in length and 13 mm in width molded from the resin composition, is at least 6,000 times.

8. The resin composition according to any one of Claims 1 to 7, wherein the melt flow rate, as measured in accordance with ASTM-D3159, is at least 1.5 g/10 min.

9. A method for producing a resin composition, comprising dry-mixing or melt-kneading a fluororesin and a carbon nanostructure, wherein the carbon nanostructure includes a plurality of carbon nanotubes that are branched, cross-linked, and share a common wall with each other.

10. The production method according to Claim 9, wherein a master batch is prepared by melt-kneading a portion of the fluororesin and the carbon nanostructure, and then the master batch and the remaining portion of the fluororesin are melt-kneaded.

11. The production method according to Claim 9, wherein the fluororesin and the carbon nanostructure are melt-kneaded by a twin-screw extruder,

wherein the twin-screw extruder has a screw with a plurality of screw elements including at least two kneading disc elements, mounted on a shaft, and a barrel incorporating two such screws, and
the kneading area ratio, which is a value having the total length of said at least two kneading disc elements divided by the total length of the screw, is greater than 0.1.

12. The production method according to Claim 11, wherein the effective shear rate quantity determined by the following formula (1) is greater than 8:

$$\text{Effective shear rate quantity} = \text{said kneading area ratio} \times \text{screw shear rate (seconds}^{-1}) \text{ obtained by the following formula (2)} \quad (1)$$

$$\text{Screw shear rate} = 3 \times \text{barrel diameter (mm)} \times \text{screw rotation speed (rpm)}/60 \quad (2)$$

13. The production method according to any one of Claims 9 to 12, wherein the amount of the carbon nanostructure is from 0.001 to 10 mass%, to the entire mass of the resin composition.

14. A molded body having the resin composition as defined in any one of Claims 1 to 8 molded.

Fig. 1

10

16

12

18    C6        C5        C4        C3        C2        C1

## INTERNATIONAL SEARCH REPORT

| | International application No. |
|---|---|
| | **PCT/JP2022/020999** |

**A. CLASSIFICATION OF SUBJECT MATTER**

*C08L 27/12*(2006.01)i; *B29B 7/48*(2006.01)i; *B29B 9/12*(2006.01)i; *C08J 3/22*(2006.01)i; *C08K 3/04*(2006.01)i; *C08L 27/18*(2006.01)i

FI: C08L27/12; C08K3/04; C08L27/18; B29B7/48; B29B9/12; C08J3/22 CEW

According to International Patent Classification (IPC) or to both national classification and IPC

**B. FIELDS SEARCHED**

Minimum documentation searched (classification system followed by classification symbols)

C08L27/12; B29B7/48; B29B9/12; C08J3/22; C08K3/04; C08L27/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-533187 A (APPLIED NANOSTRUCTURED SOLUTIONS, LLC) 19 November 2015 (2015-11-19) claims, paragraphs [0026], [0029], [0034], [0042], [0049] | 1-14 |
| X | JP 2007-112885 A (BUSSAN NANOTECH RESEARCH INSTITUTE INC.) 10 May 2007 (2007-05-10) claims, paragraphs [0009], [0010], [0016], [0060], [0061], [0091], [0092], example 1 (paragraphs [0119]-[0132], table 5), fig. 4 | 1-14 |
| A | JP 2007-512658 A (GENERAL ELECTRIC CO.) 17 May 2007 (2007-05-17) | 1-14 |
| P, X | JP 2022-64068 A (TOGAWA RUBBER CO., LTD.) 25 April 2022 (2022-04-25) claims, examples 1-4 (paragraphs [0028]-[0038]) | 1-14 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 July 2022** | **02 August 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/020999**

| Patent document cited in search report | | | Publication date (day/month/year) | Patent family member(s) | | | Publication date (day/month/year) |
|---|---|---|---|---|---|---|---|
| JP | 2015-533187 | A | 19 November 2015 | US<br>claims, paragraphs [0036],<br>[0039], [0044], [0052], [0059]<br>WO<br>EP<br>CN<br>KR | 2014/0094541<br><br><br>2013/052704<br>2764560<br>103889890<br>10-2014-0092317 | A1<br><br><br>A1<br>A1<br>A<br>A | |
| JP | 2007-112885 | A | 10 May 2007 | US<br>claims, paragraphs [0012],<br>[0013], [0019], [0089], [0090],<br>[0125], [0126], example 1<br>(paragraphs [0163]-[0174],<br>table 5), fig. 4A, 4B<br>WO<br>EP | 2009/0124746<br><br><br><br><br>2007/046409<br>1939249 | A1<br><br><br><br><br>A1<br>A1 | |
| JP | 2007-512658 | A | 17 May 2007 | US<br>WO<br>EP<br>KR<br>CN | 2005/0029498<br>2005/015574<br>1654740<br>10-2006-0060682<br>1864233 | A1<br>A1<br>A1<br>A<br>A | |
| JP | 2022-64068 | A | 25 April 2022 | (Family: none) | | | |

Form PCT/ISA/210 (patent family annex) (January 2015)

**EP 4 349 911 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015083666 A
- JP 2015533187 A
- JP 2007314720 A
- JP 2021087368 A